(19) Europäisches Patentamt
European Patent Office
Office européen des brevets

(11) EP 2 771 403 B1

(12) **EUROPÄISCHE PATENTSCHRIFT**

(45) Veröffentlichungstag und Bekanntmachung des Hinweises auf die Patenterteilung:
**17.05.2017 Patentblatt 2017/20**

(21) Anmeldenummer: **12778101.1**

(22) Anmeldetag: **23.10.2012**

(51) Int Cl.:
***C08L 67/02*** *(2006.01)* ***C08L 69/00*** *(2006.01)*

(86) Internationale Anmeldenummer:
**PCT/EP2012/070981**

(87) Internationale Veröffentlichungsnummer:
**WO 2013/060685 (02.05.2013 Gazette 2013/18)**

(54) **VERFAHREN ZUR HERSTELLUNG UND STABILISIERUNG VON SCHLAGZÄHMODIFIZIERTEN POLYCARBONAT- ZUSAMMENSETZUNGEN UNTER VERWENDUNG VON VERDÜNNTEN LÖSUNGEN SAURER VERBINDUNGEN**

METHOD FOR PRODUCING AND STABILISING IMPACT RESISTANT POLYCARBONATE COMPOUNDS USING DILUTED SOLUTIONS OF ACIDIC COMPOUNDS

PROCÉDÉ DE FABRICATION ET DE STABILISATION DE COMPOSITIONS À BASE DE POLYCARBONATE À IMPACT MODIFIÉ UTILISANT DES SOLUTIONS DILUÉES DE COMPOSITIONS ACIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2011 EP 11186663**

(43) Veröffentlichungstag der Anmeldung:
**03.09.2014 Patentblatt 2014/36**

(73) Patentinhaber: **Covestro Deutschland AG**
**51373 Leverkusen (DE)**

(72) Erfinder:
- **SEIDEL, Andreas**
  **41542 Dormagen (DE)**
- **THIEM, Hans-Jürgen**
  **41539 Dormagen (DE)**

(74) Vertreter: **Levpat**
**c/o Covestro AG**
**Gebäude 4825**
**51365 Leverkusen (DE)**

(56) Entgegenhaltungen:
**EP-A2- 0 549 205** **WO-A1-2007/065579**
**US-A- 4 299 929** **US-A1- 2006 287 422**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 771 403 B1

Printed by Jouve, 75001 PARIS (FR)

## Beschreibung

Die vorliegende Erfindung betrifft ein Verfahren zur Herstellung von stabilisierten schlagzähmodifizierten Polycarbonat-Zusammensetzungen unter Verwendung von verdünnten Lösungen saurer Verbindungen sowie die so hergestellten Zusammensetzungen selbst.

Das erfindungsgemäße Compoundierungsverfahren erlaubt die Herstellung von schlagzähmodifizierten Polycarbonatzusammensetzungen mit einer vorteilhaften Kombination aus Hydrolysestabilität und hoher Verarbeitungsstabilität gemessen an Schlierenbildung, Polycarbonatmolekulargewichtsabbau, Rohton- und Glanzgradstabilität sowie Tieftemperaturkerbschlagzähigkeit, Reißdehnung und Spannungsrißbeständigkeit unter Medieneinfluss jeweils betrachtet an Bauteilen, die bei hohen Verarbeitungstemperaturen gefertigt wurden.

Als Compoundieren bezeichnet man in der Polymeraufbereitung die Herstellung einer fertigen Kunststoff-Formmasse, dem Compound, aus gegebenenfalls mehreren polymeren Rohstoffen unter gegebenenfalls Zugabe von Polymeradditiven wie beispielsweise Füll- und Verstärkungsstoffen, Haftvermittlern, Gleitmitteln, Stabilisatoren etc.. Die Compoundierung erfolgt überwiegend in Knetern oder Extrudern und umfasst die Verfahrensoperationen Fördern, Aufschmelzen, Dispergieren, Mischen, Entgasen und Druckaufbau. An die Compoundierung schließt sich in der Regel eine durch Abkühlung herbeigeführte Erstarrung des Compounds sowie dessen Granulierung an.

Emulsionspolymerisate, die in Polycarbonat-Zusammensetzungen als Schlagzähmodifikator eingesetzt werden, werden im Allgemeinen zwecks Neutralisierung basisch wirkender Polymerisationsprozesshilfsstoffe, wie beispielsweise Emulgatoren, im sauren Milieu aufgearbeitet. Dieses ist erforderlich, um eine ausreichende Thermostabilität der Zusammensetzungen zu gewährleisten, da basische Komponenten bekannterweise dazu neigen, das Polycarbonat unter Verarbeitungstemperaturen thermisch abzubauen.

Oft ist es erforderlich Polycarbonat-Zusammensetzungen enthaltend Emulsionspfropfpolymerisate als Schlagzähmodifikator durch Zugabe saurer Additive zusätzlich zu stabilisieren. Insbesondere ist dieses der Fall, wenn solche Emulsionspfropfpolymerisate zum Einsatz kommen, die im basischen oder unzureichend saurem Milieu aufgearbeitet wurden.

Solche aus dem Stand der Technik bekannten Zusammensetzungen weisen in der Regel zwar eine gute Verarbeitungsstabilität, jedoch mangelhafte Stabilität gegenüber hydrolytischer Spaltung des Polycarbonats unter Anwendungsbedingungen (beispielsweise bei Temperaturen <100°C und hoher Luftfeuchte) und einen schlechten (gelben) Rohton auf.

EP-A 900 827 beschreibt schlagzähmodifizierte Polycarbonat-Zusammensetzungen mit verbesserter Thermostabilität enthaltend Emulsionspolymerisate, welche im Wesentlichen frei von jeglichen basischen Komponenten sind, die das Polycarbonat abbauen. Gemäß dieser Anmeldung zeigen solche Polycarbonat-Zusammensetzungen, die mit Emulsionspolymerisaten schlagzähmodifiziert sind, welche herstellungsbedingt basische Verunreinigungen enthalten, eine mangelhafte Verarbeitungsstabilität.

EP-A 576 950 A1 und WO-A 2007/065579 beschreiben basische Verunreinigungen enthaltende Zusammensetzungen enthaltend Polycarbonat und Acrylnitril-Butadien-Styrol-(ABS)-Polymere, die mit multifunktionellen organischen Carbonsäuren stabilisiert werden. Solche Zusammensetzungen weisen eine gute Thermostabilität im Hinblick auf die Integrität des Molekulargewichts der Polycarbonatkomponente bei hohen Verarbeitungstemperaturen auf, neigen jedoch im Spritzguss zur Ausbildung von Oberflächendefekten (Schlieren) auf den aus ihnen hergestellten Formteilen.

US2006/0287422 beschreibt thermoplastische Zusammensetzungen enthaltend Polycarbonat, einen Schlagzähmodifikator, optional ein Vinylcopolymer, einen Mineralfüllstoff und eine Säure oder ein saures Salz, mit verbesserten mechanischen Eigenschaften und reduzierter Neigung zum thermischen Abbau. Die Anmeldung offenbart als bevorzugte Säuren auch phosphorbasierende Verbindungen der allgemeinen Formel $H_mP_tO_n$, im Speziellen unter anderem auch Phosphorsäure. Die Anmeldung offenbart, dass die erfindungsgemäßen Zusammensetzungen mit im Stand der Technik beschriebenen Verfahren hergestellt werden können.

In der WO-A 2010/063381 werden schlagzähmodifizierte Polycarbonatzusammensetzungen mit verbesserter Kombination aus Hydrolyse- und Verarbeitungsstabilität beschrieben enthaltend Polycarbonat, ein basisch verunreinigtes Emulsionspfropfpolymerisat und eine saure Phosphorverbindung mit mindestens einer P-OH-Funktionalität. Als saure Phosphorverbindungen werden sowohl spezielle cyclische Organophosphitverbindungen als auch anorganische oder organische Phophorverbindungen wie beispielsweise Phosphorsäure oder Phosphorsäureester beschrieben.

Die EP 22 57 590 offenbart Polycarbonat-Zusammensetzungen mit verbesserter Kombination aus Rohton, Hydrolyse- und Verarbeitungsstabilität enthaltend Polycarbonat, kautschukmodifiziertes Pfropfpolymerisat enthaltend herstellungsbedingte Rückstände eines Fettsäuresalz-Emulgators, wobei das Pfropfpolymerisat in wässriger Dispersion einen pH-Wert von größer als 7 aufweist, und ein saures Additiv. Als saure Additiv werden in dieser Anmeldung hydroxyfunktionalisierte Mono- und Poly-Carbonsäuren sowie Phosphorsäure offenbart.

Während aus dem Stand der Technik bekannt ist, z.B. saure Verbindungen wie Zitronensäure oder Phosphorsäure zuzusetzen, führt der Einsatz dieser Säuren in Polycarbonatzusammensetzungen, welche nach im Stand der Technik beschriebenen Verfahren hergestellt wurden, aber häufig zu Nachteilen wie Schlierenbildung an der Oberfläche

aus diesen Zusammensetzungen hergestellter Bauteile oder starkem Molekulargewichtsabbau sowie mangelhaften mechanischen Eigenschaften.

Keine der genannten Stellen beschreibt ein Verfahren zur Herstellung stabilisierter Polycarbonatzusammensetzungen gemäß der vorliegenden Erfindung.

Aufgabe der vorliegenden Erfindung war es somit, ein Verfahren zur Herstellung stabilisierter schlagzähmodifizierter Polycarbonat-Zusammensetzungen bereitzustellen, die die vorgenannten Nachteile nicht aufweisen.

Überraschenderweise wurde gefunden, dass schlagzähmodifizierte Polymerzusammensetzungen, hergestellt nach dem erfindungsgemäßen Verfahren, enthaltend

A 10 bis 98 Gew.-Teile, bevorzugt 30 bis 90 Gew.-Teile, weiter bevorzugt 50 bis 80 Gew.-Teile, besonders bevorzugt 55 bis 65 Gew.-Teile, jeweils bezogen auf die Summe der Komponenten A+B+C+D+E, mindestens eines Polymers ausgewählt aus der Gruppe der aromatischen Polycarbonate, aromatischen Polyestercarbonate und aromatischen Polyester sowie Mischungen daraus,

B 0,5 bis 50,0 Gew.-Teile, bevorzugt 1 bis 30 Gew.-Teile, weiter bevorzugt 1,5 bis 20,0 Gew.-Teile, besonders bevorzugt 1,5 bis 5,0 Gew.-Teile, jeweils bezogen auf die Summe der Komponenten A+B+C+D+E, mindestens eines pulverförmigen kautschukmodifizierten Vinyl(co)polymerisats,

C 0 bis 80 Gew.-Teile, bevorzugt 10 bis 60 Gew.-Teile, weiter bevorzugt 15 bis 50 Gew.-Teile, besonders bevorzugt 20 bis 40 Gew.-Teile, jeweils bezogen auf die Summe der Komponenten A+B+C+D+E, mindestens einer Komponente ausgewählt aus kautschukmodifizierten Vinyl(co)polymerisaten in Granulatform und kautschukfreien Vinyl(co)polymerisaten,

D 0,002 bis 0,200 Gew.-Teile, bevorzugt 0,005 bis 0,100 Gew.-Teile, weiter bevorzugt 0,005 bis 0,050 Gew.-Teile, und besonders bevorzugt 0,007 bis 0,020 Gew.-Teile, jeweils bezogen auf die Summe der Komponenten A+B+C+D+E, mindestens einer Brönstedsäure,

E 0,1 bis 40,0 Gew.-Teile, bevorzugt 0,2 bis 25,0 Gew.-Teile, weiter bevorzugt 0,3 bis 10,0 Gew.-Teile, besonders bevorzugt 0,5 bis 3,0 Gew-Teile, jeweils bezogen auf die Summe der Komponenten A+B+C+D+E, Zusatzstoffe mit Ausnahme der üblicherweise zugesetzten Säuren,

wobei alle Gewichtsteilangaben in der vorliegenden Anmeldung so normiert sind, dass die Summe der Gewichtsteile der Komponenten A+B+C+D+E in der Zusammensetzung 100 ergeben, das gewünschte Eigenschaftsprofil aufweisen, wobei in dem erfindungsgemäßen Verfahren

(i) in einem ersten Verfahrensschritt eine Lösung der sauren Verbindung D mit einer Konzentration von 0,5 bis 8 Gew.-%, insbesondere von 1 bis 6 Gew.-% hergestellt wird,

(ii) in einem zweiten Verfahrensschritt diese Lösung der sauren Verbindung D mit der Gesamt- oder einer Teilmenge des Pfropfpolymerpulvers gemäß Komponente B und optional der Gesamt- oder einer Teilmenge einer oder mehrerer weiterer pulverförmiger Komponenten der Polycarbonat-ABS-Zusammensetzung physikalisch abgemischt wird, und

(iii) diese so hergestellte Mischung mit den weiteren gegebenenfalls ebenfalls vorgemischten restlichen Komponenten A, B, C, und E der Zusammensetzung in einem Compoundieraggregat aufgeschmolzen, vermischt und ineinander dispergiert werden, wobei in einer Entgasungszone des Compoundieraggregats das Lösungsmittel, welches der Zusammensetzung durch die Lösung der sauren Verbindung zugesetzt wurde, durch Anlegen eines Unterdrucks wieder entfernt wird und nachfolgend die so hergestellte Polymerschmelze durch Abkühlen verfestigt und granuliert wird.

In einer bevorzugten Ausführungsform werden in Schritt (ii) neben der Komponente D auch weitere Stabilisatoren gemäß Komponente E mit Komponente B vermischt.

In einer besonders bevorzugten Ausführungsform werden in Schritt (ii) neben der Komponente D und optional weiterer Stabilisatoren gemäß Komponente E keine weiteren polymeren Komponenten der Zusammensetzung mit Komponente B vermischt.

In einer weiter bevorzugten Ausführungsform werden in Schritt (ii) zunächst die Komponenten B und die Lösung der sauren Verbindung aus Verfahrensschritt (i) gemischt, bevor weitere pulverförmige Komponenten zugesetzt werden.

Bei einem Anteil der Komponente B von mehr als 10 Gew.-Teilen, bezogen auf die Gesamtzusammensetzung, wird in Schritt (ii) bevorzugt nur eine Teilmenge von B eingesetzt, besonders bevorzugt eine Teilmenge von 1,5 bis 5,0

Gew.-Teilen.

Als Lösungsmittel in Schritt (i) können sowohl organische als auch anorganische Lösungsmittel verwendet werden, wobei anorganische Lösungsmittel bevorzugt sind.

In einer besonders bevorzugten Ausführungsform ist das Lösungsmittel in Schritt (i) Wasser.

In einer weiteren bevorzugen Ausführunsform wird die Lösung der Komponente D in der in Schritt (ii) hergestellten Mischung in einem Anteil von, bezogen auf die Summe der Komponenten B und D in dieser Mischung, nicht mehr als 30 Gew.-Teilen, besonders bevorzugt nicht mehr als 20 Gew.-Teilen, insbesondere 10 bis 20 Gew.-Teilen eingesetzt.In einer bevorzugten Ausführungsform wird die aus Schritt (ii) resultierende Mischung mit den jeweiligen Gesamtmengen bzw. nach Schritt (ii) verbliebenen Teilmengen der Komponenten A bis E der Zusammensetzung in einem Compoundierungsaggregat durch Zuführung thermischer und/oder mechanischer Energie auf eine Temperatur von 200°C bis 350°C, bevorzugt 220°C bis 320°C, besonders bevorzugt 240°C bis 300°C aufgeheizt und dadurch aufgeschmolzen, gemischt, ineinander dispergiert und nachfolgend in einer Entgasungszone des Compoundierungsaggregats entgast,

- wobei das Compoundierungsaggregat eine Aufschmelz- und Mischzone oder eine kombinierte Aufschmelz- und Mischzone aufweist,

- wobei die aus Schritt (ii) resultierende Mischung vollständig oder optional jeweils teilweise zum einen gemeinsam mit den Restmengen der Komponenten A bis D der Zusammensetzung in eine nachfolgend als Einzugszone bezeichnete Zone vor der Aufschmelzzone in das Compoundierungsaggregat, oder alternativ in eine Zone hinter der Aufschmelzzone direkt in die vorgemischte Schmelze der in die Einzugszone des Compoundierungsaggregates dosierten Komponenten der Zusammensetzung dosiert werden kann,

- wobei in der Entgasungszone des Compoundierungsaggregats ein absoluter Druck $p_{abs}$ von höchstens 800 mbar, bevorzugt höchstens 500 mbar, besonders bevorzugt höchstens 200 mbar eingestellt wird,

- wobei die mittlere Verweilzeit, in der die Schmelze der Zusammensetzung mit dem Lösungsmittel in Kontakt steht, welches über die in Verfahrensschritt (ii) hergestellten Mischung in das Verfahren eingebracht wird, bevorzugt auf maximal 90 s, besonders bevorzugt maximal 60 s, insbesondere bevorzugt auf max. 30 s begrenzt ist, und

die resultierende Schmelze bei Austritt aus dem Compoundierungsaggregat durch Abkühlen wieder verfestigt wird.

Unter "Pulver" oder "pulverförmig" im Sinne der Erfindung wird eine Komponente oder eine Mischung aus mehreren Komponenten verstanden, die im festen Aggregatszustand vorliegt und bei denen die Partikel Teilchengrößen von kleiner als 2 mm, bevorzugt von kleiner als 1 mm, insbesondere von kleiner als 0,5 mm aufweisen.

Unter "Granulat" im Sinne der Erfindung wird eine Komponente oder eine Mischung aus mehreren Komponenten verstanden, die im festen Aggregatszustand vorliegt, wobei die festen Partikel eine Teilchengröße von mindestens 2 mm und im allgemeinen von nicht mehr als 10 mm aufweisen. Die Granulatkörner können beliebige Form aufweisen, beispielsweise Linsenform, Kugelform oder Zylinderform.

## Komponente A

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

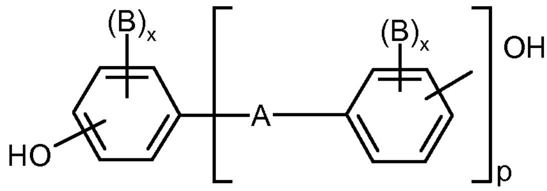

(I),

wobei

A eine Einfachbindung, $C_1$ bis $C_5$-Alkylen, $C_2$ bis $C_5$-Alkyliden, $C_5$ bis $C_6$-Cycloalkyliden, - O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

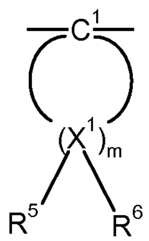

(II)

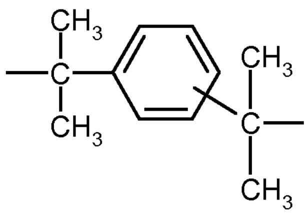

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die erfindungsgemäß als Komponente A in Frage kommenden aromatischen Polyester sind in bevorzugter Ausführungsform Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte aromatische Polyester enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten aromatischen Polyester können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten aromatischen Polyester können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die aromatischen Polyester können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind aromatische Polyester, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten aromatischen Polyester besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die aromatischen Polyester lassen sich nach bekannten Methoden herstellen (s. z.B. Kunststoff-Handbuch, Band VIII, S. 695 ff., Carl-Hanser-Verlag, München 1973).

Die Komponente A kann als Pulver und/oder Granulat eingesetzt werden.

**Komponente B**

Bei der Komponente B handelt es sich um ein pulverförmiges Pfropfpolymer oder um eine Mischung aus mehreren pulverförmigen Pfropfpolymeren. Bevorzugt als Komponente B zum Einsatz kommende Pfropfpolymere umfassen ein oder mehrere Pfropfpolymerisate von

B.1 5 bis 95, vorzugsweise 20 bis 90, insbesondere 25 bis 50 Gew.-%, bezogen auf Komponente B, wenigstens eines Vinylmonomeren auf

B.2 95 bis 5, vorzugsweise 80 bis 10, insbesondere 75 bis 50 Gew.-%, bezogen auf Komponente B, einer oder mehrerer kautschukartiger Pfropfgrundlagen, wobei die Glasübergangstemperaturen der Pfropfgrundlagen vorzugsweise < 10°C, weiter bevorzugt < 0°C, besonders bevorzugt < -20°C, sind.

Die Glasübergangstemperaturen werden mittels dynamischer Differenzkalorimetrie (DSC) gemäß der Norm DIN EN 61006 bei einer Heizrate von 10 K/min mit Definition der Tg als Mittelpunkttemperatur (Tangentenmethode) bestimmt.

Die Pfropfgrundlage B.2 hat im allgemeinen eine mittlere Teilchengröße ($d_{50}$-Wert) von 0,05 bis 10 $\mu$m, vorzugsweise 0,1 bis 2 $\mu$m, besonders bevorzugt 0,15 bis 0,6 $\mu$m.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere B.1 sind vorzugsweise Gemische aus

B.1.1 50 bis 99, bevorzugt 60 bis 80, insbesondere 70 bis 80 Gew.-Teile, bezogen auf B.1, Vinylaromaten und/oder kernsubstituierten Vinylaromaten (wie Styrol, α-Methylstyrol, p-Methylstyrol, p-Chlorstyrol) und/oder Methacrylsäure-($C_1$-$C_8$)-Alkylester, wie Methylmethacrylat, Ethylmethacrylat), und

B.1.2 1 bis 50, bevorzugt 20 bis 40, insbesondere 20 bis 30 Gew.-Teilen, bezogen auf B.1, Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2).

Besonders bevorzugt ist reiner Polybutadienkautschuk.

Besonders bevorzugte Polymerisate B sind beispielsweise ABS oder MBS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfpolymerisate B besitzten eine Kern-Schale-Struktur.

Der Gelanteil der Pfropfgrundlage B.2 beträgt bei in Emulsionspolymerisation hergestellten Pfropfpolymerisaten mindestens 30 Gew.-%, vorzugsweise mindestens 40 Gew.-% (in Toluol gemessen).

Der Gelgehalt der Pfropfgrundlage B.2 bzw. der Pfropfpolymere B wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Geeignete Acrylatkautschuke gemäß B.2 sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

**Komponente C**

Bei den kautschukfreien Vinyl(Co)Polymerisaten gemäß Komponente C.1 handelt es sich um kautschukfreie Homo- und/oder Copolymerisate von mindestens einem Monomeren aus der Gruppe der Vinylaromaten, Vinylcyanide (ungesättigte Nitrile), (Meth)Acrylsäure-($C_1$ bis $C_8$)-Alkylester, ungesättigten Carbonsäuren sowie Derivaten (wie Anhydride und Imide) ungesättigter Carbonsäuren.

Insbesondere geeignet sind (Co)Polymerisate C.1 aus

C.1.1 50 bis 99 Gew.-%, bevorzugt 60 bis 80, insbesondere 70 bis 80 Gew.-%, jeweils bezogen auf das (Co)Polymerisat C.1, mindestens eines Monomeren ausgewählt aus der Gruppe der Vinylaromaten (wie beispielsweise Styrol, $\alpha$-Methylstyrol), kernsubstituierten Vinylaromaten (wie beispielsweise p-Methylstyrol, p-Chlorstyrol) und (Meth)Acrylsäure-($C_1$-$C_8$)-Alkylester (wie beispielsweise Methylmethacrylat, n-Butylacrylat, tert.-Butylacrylat) und

C.1.2 1 bis 50 Gew.-%, bevorzugt 20 bis 40, insbesondere 20 bis 30 Gew.-%, jeweils bezogen auf das (Co)Polymerisat C.1, mindestens eines Monomeren ausgewählt aus der Gruppe der Vinylcyanide (wie beispielsweise ungesättigte Nitrile wie Acrylnitril und Methacrylnitril), (Meth)Acrylsäure-($C_1$-$C_8$)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate C.1 sind harzartig, thermoplastisch und kautschukfrei. Besonders bevorzugt ist das Copolymerisat aus C.1.1 Styrol und C.1.2 Acrylnitril.

Derartige (Co)Polymerisate C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte $M_w$ (Gewichtsmittel, ermittelt durch GPC) zwischen 15.000 und 250.000 g/mol.

Die kautschukfreien (Co)Polymerisate C.1 können als Pulver und/oder als Granulat eingesetzt werden.

Die kautschukmodifizierten Vinyl(co)polymere gemäß Komponente C.2 sind ausgewählt aus mindestens einem Polymeren der Gruppe bestehend aus

C.2.1 in Granulatform vorliegende Pfropfpolymere und

C.2.2 in Granulatform vorliegende Präcompounds aus mindestens zwei Komponenten ausgewählt aus der Gruppe der Pfropfpolymeren C.2.2.1 und kautschukfreien Vinyl(co)polymeren gemäß Komponente C.1.

Dabei handelt es sich bei den Pfropfpolymeren gemäß den Komponenten C.2.1 und C.2.2.1 jeweils um Pfropfpolymere, welche hinsichtlich des chemischen Aufbaus und der Herstellung der Beschreibung der Komponente B entsprechen, wobei sich Komponenten C.2.1 und C.2.2.1 von der Beschreibung der Komponente B aber dadurch unterscheiden, dass es sich bei C.2.1 um Pfropfpolymere, welche in Granulatform vorliegen, und bei C.2.2.1 um solche Pfropfpolymere die entweder in Granulat- oder Pulverform vorliegen können, handelt.

Unter Präcompound im Sinne der Erfindung sind zu verstehen solche Mischungen aus Pfropfpolymeren C.2.2.1 und kautschukfreien Vinyl(co)polymeren C.1, welche in einem Compoundierungsaggregat, beispielsweise einem Knetreaktor oder Zweiwellextruder durch Zuführung thermischer und/oder mechanischer Energie auf eine Temperatur von 180°C bis 300°C, bevorzugt 200°C bis 280°C, besonders bevorzugt 220°C bis 260°C aufgeheizt und dadurch aufgeschmolzen, gemischt und ineinander dispergiert, und danach wieder abgekühlt und granuliert worden sind. In bevorzugter Ausführungsform kommt dabei das Pfropfpolymer C.2.2.1 in feuchtem Zustand (d.h. in Anwesenheit von Wasser) gemäß der Verfahren, welche in EP 0 768 157 A1 und EP 0 867 463 A1 beschrieben sind, zum Einsatz.

Präcompounds gemäß Komponente C.2.2 enthalten bevorzugt 10 bis 70 Gew.-Teile, besonders bevorzugt 20 bis 60 Gew.-Teile, insbesondere bevorzugt 25 bis 55 Gew.-Teile (jeweils bezogen auf den Präcompound) Pfropfpolymer C.2.2.1 und bevorzugt 30 bis 90 Gew.-Teile, besonders bevorzugt 40 bis 80 Gew.-Teile, insbesondere bevorzugt 45 bis 75 Gew.-Teile (jeweils bezogen auf den Präcompound) an kautschukfreiem Vinyl(co)polymer C.1.

## Komponente D

Als Komponente D kommt mindestens eine beliebige Brönstedt-saure Verbindung zum Einsatz.

Bevorzugt ist als Brönstedt-saure Verbindung eine anorganische Säure, weiter bevorzugt eine phosphorsaure Verbindung, d.h. eine Verbindung mit mindestens einer POH-Funktionalität.

Beispiele solcher Verbindungen sind

- ortho-Phosphorsäure $P(O)(OH)_3$,
- phosphorige Säure $HP(O)(OH)_2$,
- hypophosphorige Säure $H_2P(O)(OH)$,
- Organophosphorverbindungen der phosphorigen und hypophosphorigen Säure mit der allgemeinen Formel $RP(O)(OH)_2$, R(H)P(O)(OH) und R(R')P(O)(OH), wobei R und R' unabhängig voneinander für einen beliebigen gegebenenfalls substituierten Alkyl-, Aryl- oder Alkylaryl-Rest stehen, sowie zyklische oder lineare oligomere oder polymere Verbindungen, saure Salze sowie saure Teilester der zuvor genannten Verbindungen. Besonders bevorzugt sind R und R' unabhängig voneinander ausgewählt aus der Gruppe, die Methyl-, Ethyl-, Propyl-, Isopropyl-, Butyl-, Isobutyl-, und tert-Butyl-Reste umfaßt.

In bevorzugter Ausführungsform handelt es sich um eine Brönstedt-saure Phosphorverbindung, in der der Phosphor die Oxidationsstufe +3 oder +5 besitzt. Besonders bevorzugt ist die Oxidationsstufe +5.

Als besonders bevorzugte Brönstedt-saure Phosphorverbindungen eignen sich beispielsweise ortho-Phosphorsäure, meta-Phosphorsäure, Oligo- und Polyphosphorsäuren, phosphorige Säure, Methylphosphonsäure CH3P(O)(OH)2, saure Salze der zuvor genannten Verbindungen mit ein- und/oder zweiwertigen Metallkationen wie beispielsweise NaH2PO4, Na2HPO4, KH2PO4, K2HPO4, Mg0,5H2PO4, MgHPO4, Ca0,5H2PO4, CaHPO4, Zn0,5H2PO4, ZnHPO4, NaH2PO3, KH2PO3, Mg0,5H2PO3,Ca0,5H2PO3, Zn0,5H2PO3 sowie Teilester der zuvor genannten Verbindungen wie beispielsweise P(O)(OH)(OR)(OR'), P(O)(OH)2(OR), HP(O)(OH)(OR) und CH3P(O)(OH)(OR), wobei R, R' wie oben definiert sind.

In bevorzugter Ausführungsform handelt es sich bei der Brönstedt-sauren Phosphorverbindung um ortho-Phosphorsäure oder phosphorige Säure, in besonders bevorzugter Ausführungsform um ortho-Phosphorsäure.

## Komponente E

Die Zusammensetzung kann als Komponente E handelsübliche Polymeradditive enthalten.

Als handelsübliche Polymeradditive gemäß Komponente E kommen Additive wie beispielsweise Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe (z.B. Talk, optinonal gemahlene Glas- oder Karbonfasern, Glas- oder Keramik(hohl)kugeln, Glimmer, Kaolin, $CaCO_3$ und Glasschuppen) sowie Farbstoffe und Pigmente (beispielsweise Ruß, Titandioxid oder Eisenoxid), oder aber Mischungen mehrerer der genannten Additive in Frage.

Als Flammschutzmittel gemäß Komponente E werden bevorzugt phosphorhaltige Verbindungen eingesetzt. Diese sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV)

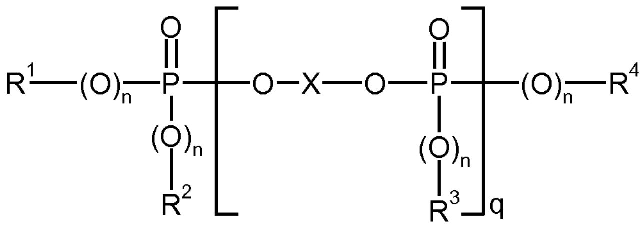

(IV)

worin

R¹, R², R³ und R⁴, unabhängig voneinander jeweils gegebenenfalls halogeniertes $C_1$ bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl,

n unabhängig voneinander, 0 oder 1,

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen $R^1$, $R^2$, $R^3$ und $R^4$ unabhängig voneinander für $C_1$ bis $C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (IV) kann, unabhängig voneinander, 0 oder 1 sein, vorzugsweise ist n gleich 1.

q steht für Werte von 0 bis 30, bevorzugt 0,3 bis 20, besonders bevorzugt 0,5 bis 10, insbesondere 0,5 bis 6, ganz besonders bevorzugt 1,1 bis 1,6.

X steht besonders bevorzugt für

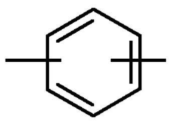 , 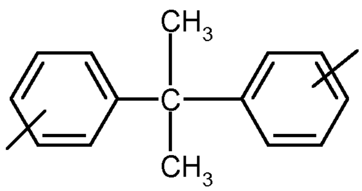 , 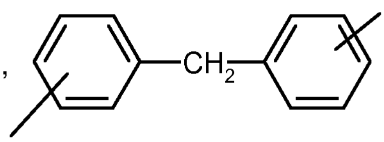 ,

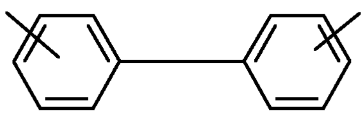 , 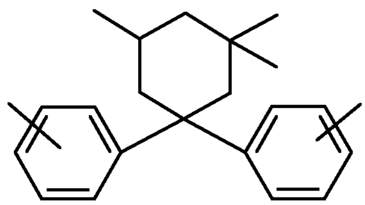

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente E können auch Mischungen verschiedener Phosphate eingesetzt werden.

Phosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresyl-phosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (IV), die sich vom Bisphenol A ableiten, ist insbesondere bevorzugt.

Höchst bevorzugt als Komponente E ist Bisphenol-A basierendes Oligophosphat gemäß Formel (IVa).

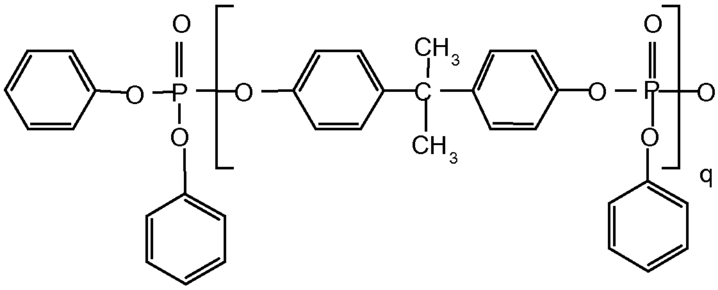

q = 1,1 (IVa)

Die Phosphorverbindungen gemäß Komponente E sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Die Flammschutzmittel werden in bevorzugter Ausführungsform in Kombination mit Polytetrafluorethylen (PTFE) als Antidrippingmittel eingesetzt.

Ferner betrifft die vorliegende Erfindung die Verwendung von auf Komponente B aufgezogenen Brönstedt-Säuren der Komponente D zur Stabilisierung basisch verunreinigter Polymermischungen enthaltend mindestens ein Polymer hergestellt durch Polykondensation bei der Compoundierung und thermischen Formgebung.

## Beispiele

### Komponente A-1

Lineares Polycarbonat auf Basis Bisphenol-A mit einem gewichtsgemitteltem Molekulargewicht Mw von 28000 g/mol (bestimmt durch Gelpermeationschromatographie (GPC) in Methylchlorid als Lösungsmittel und mit Polycarbonat als Standard).

### Komponente B1

Pulverförmiges ABS-Pfropfpolymerisat mit Kern-Schale-Struktur hergestellt in Emulsionspolymerisation bestehend aus 40 Gew.-% Styrol-Acrylnitril-Copolymer mit einem Verhältnis von Styrol zu Acrylnitril von 72 : 28 Gew.-% als Hülle auf 60 Gew.-% einer teilchenförmigen Pfropfgrundlage aus reinem Polybutadienkautschuk mit einer mittleren Teilchengröße d50 von 0,3 µm als Kern.

### Komponente B2 (Vergleich)

Polycarbonat-Pulver hergestellt durch mechanische Vermahlung eines linearen Polycarbonats auf Basis Bisphenol-A mit einem gewichtsgemitteltem Molekulargewicht $M_w$ von 31000 g/mol (bestimmt durch GPC in Methylchlorid als Lösungsmittel und mit Polycarbonat als Standard).

**Komponente C1**

ABS-Abmischung mit einem Verhältnis von Acrylnitril : Butadien : Styrol von 21 : 15 : 64 Gew.-% enthaltend ein in Emulsionspolymerisation hergestelltes, in basischem Milieu aufgearbeitetes ABS-Polymerisat, ein in Massepolymerisation hergestelltes ABS-Polymerisat und ein SAN-Polymerisat.

**Komponente C2**

Abmischung aus 35,62 Gew.-Teilen Komponente C1 und 2,97 Gew.-Teilen Komponente B1, wobei die Komponente B1 vollständig im Gew.-Verhältnis 1:1 mit dem entsprechenden Teil des SAN-Polymerisats aus Komponente C1 zu einem granulatförmigen Präcompound verarbeitet wurde und als solches in Komponente C2 zum Einsatz kommt.

**Komponente D1**

Wässrige Phosphorsäurelösung mit einer Konzentration an $H_3PO_4$ von 0,2 Gew.-%.

**Komponente D2**

Wässrige Phosphorsäurelösung mit einer Konzentration an $H_3PO_4$ von 2 Gew.-%.

**Komponente D3**

Wässrige Phosphorsäurelösung mit einer Konzentration an $H_3PO_4$ von 5 Gew.-%.

**Komponente D4**

Wässrige Phosphorsäurelösung mit einer Konzentration an $H_3PO_4$ von 10 Gew.-%.

**Komponente D5**

Konzentrierte Phosphorsäurelösung mit einer Konzentration an $H_3PO_4$ von 85 Gew.-%.

**Komponente D6**

Phosphorigsäureester des Bis-(2-hydroxy-3-cyclohexyl-5-methyl-phenyl)-methans der Formel

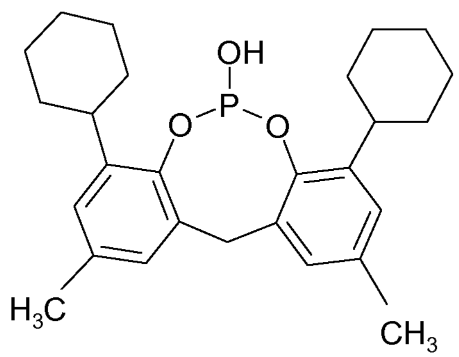

.

**Komponente E1**

Pentaerythrittetrastearat als Gleit-/Entformungsmittel

**Komponente E2**

Thermostabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)¬phenol) (Ludwigshafen, Deutschland)

**Komponente E3**

Thermostabilisator, Irganox 1076 (2,6-Di-tert-butyl-4-(octadecanoxycarbonylethyl)-phenol), BASF (Ludwigshafen, Deutschland)

**Herstellung der Formmassen**

Im ersten Verfahrensschritt (i) wurde unter Verwendung eines Labor-Container Mischers LAB CM 3-12-MB der Fa. Mixaco Dr. Herfeld GmbH & Co. KG Maschinenfabrik (Neuenrade, Deutschland) eine physikalische Mischung bestehend aus den Komponenten B und D hergestellt. Zu dieser Mischung wurden die Komponenten E1 bis E3 der jeweiligen Zusammensetzung zugegeben und nochmals unter Verwendung des Mixaco-Mischers gemischt.

Im zweiten Verfahrensschritt (ii) wurde die aus Verfahrensschritt (i) resultierende rieselfähige Pulvermischung über einen separaten Dosiertrichter gemeinsam mit den ebenfalls über separate Dosiertrichter dosierten Komponenten A und C in die Einzugszone eines ZSK25-Zweiwellenextruders der Fa. Coperion GmbH (Stuttgart, Deutschland) gegeben. Die resultierende Mischung wurde in der Aufschmelze- und Knetzone des Extruders auf eine Temperatur von 260°C gebracht und dadurch aufgeschmolzen, bei dieser Temperatur geknetet und dadurch die plastifizierten Komponenten ineinander dispergiert. Die so compoundierte Mischung wurde in der folgenden Entgasungszone des Extruders durch Anlegen eines Unterdrucks von 100 mbar (absolut) an die Schmelze entgast und dadurch das über die Komponente D in die Mischung eingebrachte Wasser aus der Polymerlegierung wieder entfernt. Der Wasserdampf fungiert dabei gleichzeitig auch als Schleppgas zur Entfernung flüchtiger organischer Verbindungen (VOCs) wie beispielsweise Restmonomere und Restlösungsmittel aus den eingesetzten Polymerrohstoffen (Komponenten A, B und C). Die entgaste Schmelze wurde danach über eine Düse aus dem Extruder ausgetragen, der resultierende Schmelzestrang zur Abkühlung durch ein auf ca. 30°C temperiertes Wasserbad geführt und der erstarrte Polymerstrang nachfolgend mittels eines Stranggranulators granuliert.

**Herstellung der Prüfkörper und Prüfung**

Die aus der jeweiligen Compoundierung resultierenden Granulate wurden auf einer Spritzgussmaschine (Fa. Arburg) bei einer Schmelzetemperatur von 260°C bzw. 300°C und einer Werkzeugtemperatur von 80°C zu Probekörpern der Abmessung 80 mm x 10 mm x 4 mm bzw. 60 mm x 40 mm x 2 mm verarbeitet.

Der **iMVR** dient als Maß für den bei erhöhten Verarbeitungstemperaturen zu erwartenden Polycarbonatmolekulargewichtsabbau und somit die **Thermostabilität** der Zusammensetzung und wird bestimmt nach ISO1133 bei einer Schmelzetemperatur von 300°C mit einer Stempellast von 5 kg nach einer Haltezeit bei dieser Temperatur von 300°C von 15 min.

Der **Rohton** / **die Eigenfarbe** wird in Reflexion gemessen gemäß DIN 6174 an Plättchen der Abmessung 60 mm x 40 mm x 2 mm, welche bei einer Schmelzetemperatur von 260°C bzw. 300°C im Spritzguss hergestellt wurden. Der Yellowness-Index YI wird nach ASTM E313 berechnet.

Der **Glanzgrad** wird ermittelt an Plättchen der Abmessung 60 mm x 40 mm x 2 mm, welche bei einer Schmelzetemperatur von 260°C bzw. 300°C im Spritzguss hergestellt wurden. Die Messung erfolgt in Reflexion bei Messwinkeln von 20° und 60° gemäß DIN 67530.

Als Maß für die Verarbeitungsstabilität dient die relative Änderung der bei 20° bzw. 60° Messwinkel gemessene Glanzgrade bei einer Erhöhung der Schmelzetemperatur im Spritzguss von 260°C auf 300°C, welche berechnet wird gemäß:

$$\text{Glanzgradänderung (260°C}\rightarrow\text{300°C)} = 100\% \cdot \text{(Glanzgrad bei 300°C - Glanzgrad bei 260°C)/Glanzgrad bei 260°C.}$$

Die Glanzgradänderung wird getrennt für die beiden Messwinkel ermittelt.

Die Neigung zur Ausbildung von Verarbeitungsschlieren als Maß für die Thermostabilität wird ebenfalls an diesen Plättchen der Abmessung 60 mm x 40 mm x 2 mm, welche bei einer Schmelzetemperatur 300°C im Spritzguss hergestellt wurden, visuell ermittelt.

Die Bestimmung der **Kerbschlagzähigkeit** ($a_k$) erfolgt gemäß ISO 180/1A durch eine 10-fach-Bestimmung an Prüfstäben der Abmessung 80 mm x 10 mm x 4 mm, welche zur Simulation einer Verarbeitung bei erhöhten Verarbeitungstemperaturen bei einer Schmelzetemperatur von 300°C im Spritzguss hergestellt wurden. Die Messung erfolgt bei Temperaturen von 23°C, 10°C, 0°C, -10°C, -20°C und -30°C.

Die **$a_k$-Zäh-Spröd-Übergangstemperatur** wird aus den erhaltenen Messdaten ermittelt als diejenige Temperatur, bei der jeweils 50% der Einzelmessungen einen Messwert für die Kerbschlagzähigkeit von größer beziehungsweise kleiner als 30 kJ/m$^2$ aufweisen.

Die **Reißdehnung** wird ermittelt in Anlehnung an ISO 527-1,-2 an Schulterstäben der Abmessung 170 mm x

10 mm x 4 mm, welche zur Simulation einer Verarbeitung bei erhöhten Verarbeitungstemperaturen bei einer Schmelzetemperatur von 300°C im Spritzguss hergestellt wurden.

Als Maß für die **Hydrolysebeständigkeit** der Zusammensetzungen dient die Änderung des MVRs gemessen gemäß ISO 1133 bei 260°C mit einer Stempellast von 5 kg bei einer 7-tägigen Feucht-Warm-Lagerung (FWL-Lagerung) des Granulats bei 95°C und 100% relativer Luftfeuchte. Dabei wird der relative Anstieg des MVR-Wertes gegenüber dem MVR-Wert vor der entsprechenden Lagerung als ΔMVR(hydr.) berechnet, welcher sich durch nachstehende Formel definiert:

$$\Delta MVR(hyrdr) = \frac{MVR(nach\,FWL - Lagerung) - MVR(vor\,Lagerung)}{MVR(vor\,Lagerung)} \bullet 100\%$$

Die **Spannungrißbeständigkeit** unter Medieneinfluss (Environmental Stress Cracking = ESC) wird in Anlehnung an ISO 4599 an Prüfstäben der Abmessung 80 mm x 10 mm x 4 mm ermittelt, welche zur Simulation einer Verarbeitung bei erhöhten Verarbeitungstemperaturen bei einer Schmelzetemperatur von 300°C im Spritzguss hergestellt wurden. Als Maß für die Spannungsrißbeständigkeit dient dabei die Zeit bis zum Bruchversagen der Prüfkörper, die mittels einer Spannschablone mit einer externen Randfaserdehnung von 2,4 % beaufschlagt und vollständig in Rapsöl als Medium eingetaucht wurden.

**Tabelle 1**

| | V1 | V2 | 1 | V3 | 2 | 3 | 4 | V4 | V5 |
|---|---|---|---|---|---|---|---|---|---|
| **Einsatzstoff** | **Teile** | **Teile** | **Teile** | **Teile** | **Teile** | **Teile** | **Teile** | **Teile** | **Teile** |
| A1 | 60,35 | 60,35 | 60,35 | 57,38 | 60,35 | 60,35 | 60,35 | 60,35 | 60,35 |
| C1 | 35,62 | 35,62 | 35,62 | | 35,62 | 35,62 | 35,62 | 35,62 | 35,62 |
| C2 | | | | 38,59 | | | | | |
| B1 | 2,97 | 2,97 | 2,97 | | 2,97 | 2,97 | 2,97 | 2,97 | 2,97 |
| B2 | | | | 2,97 | | | | | |
| E1 | 0,74 | 0,74 | 0,74 | 0,74 | 0,74 | 0,74 | 0,74 | 0,74 | 0,74 |
| D6 | 0,12 | | | | | | | | |
| E2 | | 0,12 | 0,12 | 0,12 | 0,12 | 0,12 | 0,12 | 0,12 | 0,12 |
| E3 | 0,2 | 0,2 | 0,2 | 0,2 | 0,2 | 0,2 | 0,2 | 0,2 | 0,2 |
| D1 | | | | | | | | | 0,5 |
| D2 | | | 0,5 | 0,5 | | | | | |
| D3 | | | | | 0,2 | | | | |
| D4 | | | | | | 0,1 | | | |
| D5 | | | | | | | 0,012 | 0,5 | |
| **berechnet:**<br>effektiver H3PO4-Gehalt | - | 0 | 0,01 | 0,01 | 0,01 | 0,01 | 0,01 | 0,425 | 0,001 |
| **Prüfung** | | | | | | | | | |
| iMVR(300°C/15min) [ml/10min] | 64 | 120 | 58 | 56 | 56 | 57 | 59 | >>200* | 75 |
| Yellowness Index (260°C) | 22 | 11 | 17 | 20 | 16 | 16 | 17 | 31 | 14 |
| Yellowness Index (300°C) | 26 | 16 | 22 | 23 | 20 | 21 | 21 | 33 | 18 |
| Glanzzahl (20°/260°C) | 86 | 95 | 95 | 81 | 96 | 92 | 94 | 83 | 92 |
| Glanzzahl (20°/300°C) | 72 | 66 | 65 | 64 | 69 | 62 | 67 | 35 | 80 |
| Glanzzahl (60°/260°C) | 97 | 101 | 101 | 97 | 102 | 100 | 100 | 97 | 100 |
| Glanzzahl (60°/300°C) | 92 | 92 | 93 | 93 | 94 | 89 | 92 | 71 | 96 |

(fortgesetzt)

| Prüfung | | | | | | | | | |
|---|---|---|---|---|---|---|---|---|---|
| Thermostabilität (300°C) - Schlieren | ja | ja | nein | nein | nein | nein | nein | viele | nein |
| ak (23°C) [kJ/m2] | 43 | 33 | 45 | 44 | 44 | 43 | 44 | 39 | 43 |
| ak (-30°C) [kJ/m2] | 18 | 11 | 18 | 18 | 19 | 18 | 19 | 14 | 17 |
| ak-Zäh-Spröd-Übergangstemperatur [°C] | -15 | 10 | -15 | -15 | -15 | -15 | -15 | -5 | -15 |
| Reißdehnung [%] | 106 | 83 | 126 | 125 | 110 | 101 | 124 | 106 | 117 |
| delta MVR(hydr.) | 83% | 10% | 63% | 50% | 57% | 63% | 62% | 344% | 54% |
| ESC (Rapsöl, 2.4%) | 3:18 | 0:23 | 3:26 | 3:53 | 3:05 | 3:05 | 1:34 | 0:30 | 1:40 |
| *nicht messbar, da zu niederviskos | | | | | | | | | |

Die Daten in Tabelle 1 zeigen, dass die erfindungsgemäßen Beispiele 1 und 2 sowie die sich außerhalb des beanspruchten Rahmens befindlichen Beispiele 3 und 4, in denen die saure Phosphorverbindung in einer effektiven Konzentration von 0,01 Gew.-% (100 ppm) in Form einer wässrigen Lösung auf das Pfropfpolymer B aufgezogen wird, eine vorteilhafte Kombination aus Verarbeitungsstabilität gemessen an Schlierenbildung, Polycarbonatmolekulargewichtsabbau sowie Rohton- und Glanzgradstabilität bei hohen Verarbeitungstemperaturen, mechanischen Eigenschaften gemessen an der Kerbschlagzähigkeit als Funktion der Temperatur und der Reißdehnung, Hydrolyse- und Spannungsrißbeständigkeit aufweisen. Wird eine zu geringe effektive Konzentration der sauren Phosphorverbindung eingesetzt oder komplett auf die saure Phosphorverbindung verzichtet (vergleiche Beispiel 1 mit Vergleichsbeispielen V2 und V5), so resultiert ein nur geringfügig besserer Rohton, wobei aber die Verarbeitungsstabilität insbesondere in Bezug auf den bei hohen Verarbeitungstemperaturen beobachteten PC-Abbau sowie die Spannungsrißbeständigkeit deutlich leidet. Wird komplett auf die saure Phosphorverbindung verzichtet (vergleiche Beispiel 1 mit Vergleichsbeispiel V2), so werden darüber hinaus auch die mechanischen Kenndaten wie Kerbschlagzähigkeit, Zäh-Spröd-Übergangstemperatur und Reißdehnung in Mitleidenschaft gezogen. Umgekehrt führt der Einsatz einer zu hohen effektiven Konzentration der sauren Phosphorverbindung (vergleiche Beispiel 1 mit Vergleichsbeispiel 4) ebenfalls zu einer Verschlechterung der Verarbeitungsstabilität in Bezug auf den bei hohen Verarbeitungstemperaturen beobachteten PC-Abbau, die Ausbildung von Verarbeitungsschlieren sowie den Einbruch der Spannungsrißbeständigkeit, darüber hinaus aber auch zu einer erheblichen Beeinträchtigung des Rohtons, der Hydrolysestabilität, der Kerbschlagzähigkeit und des Glanzgrades sowie dessen Stabilität über die Verarbeitungstemperatur. Wird die saure Phosphorverbindung in Form eines dosierfähigen Feststoffes eingesetzt (Vergleichsbeispiel 1), so sind zur Erzielung einer ausreichenden Verarbeitungsstabilität vergleichsweise hohe Wirkstoffkonzentrationen erforderlich. Dieses führt zu einer Beeinträchtigung insbesondere des Rohtons und der Hydrolysestabilität. Wird die saure Phosphorverbindung in Form einer wässrigen Lösung zwar in der vorteilhaften effektiven Säurekonzentration von 0,01 Gew.-%, aber nicht auf das Pfropfpolymer B sondern auf ein pulverförmiges Polycarbonat-Mahlgut als Trägerkomponente aufgezogen (vergleiche Beispiel 1 mit Vergleichsbeispiel V3), so resultiert insbesondere ein nachteiliger Rohton und ein niedrigerer Glanzgrad bei moderaten Verarbeitungstemperaturen.

Die Daten in Tabelle 1 zeigen darüber hinaus, dass es besonders vorteilhaft ist, die saure Phosphorverbindung in Form einer hochverdünnten wässrigen Lösung auf das Pfropfpolymer B aufgezogen in die Zusammensetzung einzubringen (vergleiche Beispiele 1 und 2 mit 3 und 4). Setzt man eine konzentrierte Lösung der sauren Phosphorverbindung ein (Beispiel 4), so leidet deutlich die Spannungsrißbeständigkeit; im mittleren Konzentrationsbereich (Beispiel 3) wird dagegen die Reißdehnung in Mitleidenschaft gezogen. In besonders bevorzugter Ausführungsform wird daher die saure Phosphorverbindung im erfindungsgemäßen Verfahren in Form einer wässrigen Lösung mit einer Wirkstoffkonzentration kleiner 10 Gew.-% zum Einsatz gebracht.

## Patentansprüche

1. Verfahren zur Herstellung von schlagzähmodifizierten Polymerzusammensetzungen enthaltend

   A) 10 bis 98 Gew.-Teile , bezogen auf die Summe der Komponenten A+B+C+D+E, mindestens eines Polymers ausgewählt aus der Gruppe der aromatischen Polycarbonate, aromatischen Polyestercarbonate und aromatischen Polyester sowie Mischungen daraus,

B) 0,5 bis 50,0 Gew.-Teile , bezogen auf die Summe der Komponenten A+B+C+D+E, mindestens eines pulverförmigen kautschukmodifizierten, Vinyl(co)polymerisats.
C) 0 bis 80 Gew.-Teile, bezogen auf die Summe der Komponenten A+B+C+D+E, mindestens einer Komponente ausgewählt aus kautschukmodifizierten Vinyl(co)polymerisaten in Granulatform und kautschukfreien Vinyl(co)polymerisaten,
D) 0,002 bis 0,200 Gew.-Teile, bezogen auf die Summe der Komponenten A+B+C+D+E, mindestens einer Brönstedsäure,
E) 0,1 bis 40,0 Gew.-Teile, bezogen auf die Summe der Komponenten A+B+C+D+E, Zusatzstoffe mit Ausnahme der üblicherweise zugesetzten Säuren gemäß Komponente D,

wobei die Summe der Gewichtsteile der Komponenten A+B+C+D+E in der Zusammensetzung 100 ergibt, umfassend die Schritte:

(i) Herstellung einer Lösung der sauren Verbindung gemäß D mit einer Konzentration von 0,5 bis 8 Gew.-%,
(ii) physikalisches Abmischen der Lösung der sauren Verbindung D aus Schritt (i) mit der Gesamt- oder einer Teilmenge des Pfropfpolymerpulvers gemäß Komponente B und optional der Gesamt- oder einer Teilmenge einer oder mehrerer weiterer pulverförmiger Komponenten der Polycarbonat-ABS-Zusammensetzung,
(iii) Aufschmelzen, Vermischen und ineinander Dispergieren der Mischung aus Schritt (ii) mit den weiteren gegebenenfalls ebenfalls vorgemischten restlichen Komponenten A, B, C, und E der Zusammensetzung in einem Compoundieraggregat, wobei in einer Entgasungszone des Compoundieraggregats das Lösungsmittel, welches der Zusammensetzung durch die Lösung der sauren Verbindung zugesetzt wurde, durch Anlegen eines Unterdrucks wieder entfernt wird und nachfolgend die so hergestellte Polymerschmelze durch Abkühlen verfestigt und nachfolgend granuliert wird.

**2.** Verfahren nach Anspruch 1, **dadurch gekennzeichnet, dass** in Schritt (ii) neben der Lösung der Komponente D auch weitere Stabilisatoren der Komponente E mit B vermischt werden.

**3.** Verfahren nach Anspruch 1, **dadurch gekennzeichnet, dass** in Schritt (ii) zunächst die Komponenten B und die Lösung (i) gemischt werden, bevor weitere pulverförmige Komponenten zugesetzt werden.

**4.** Verfahren nach Anspruch 1, **dadurch gekennzeichnet, dass** der Anteil der Komponente B in Schritt (ii) max. 10 Gew.-Teile, bezogen auf die Gesamtzusammensetzung, beträgt.

**5.** Verfahren nach Anspruch 1, **dadurch gekennzeichnet, dass** der Anteil der Komponente B in Schritt (ii) 1,5 bis 5,0 Gew.-Teile, bezogen auf die Gesamtzusammensetzung, beträgt.

**6.** Verfahren nach einem der vorhergehenden Ansprüche, **dadurch gekennzeichnet, dass** die Lösung der Komponente D in der in Schritt (ii) hergestellten Mischung in einem Anteil von, bezogen auf die Summe der Komponenten B und D in dieser Mischung, nicht mehr als 30 Gew.-Teilen eingesetzt wird.

**7.** Verfahren nach einem der vorhergehenden Ansprüche, **dadurch gekennzeichnet, dass** die Lösung der Komponente D in der in Schritt (ii) hergestellten Mischung in einem Anteil von, bezogen auf die Summe der Komponenten B und D in dieser Mischung, nicht mehr als 20 Gew.-Teilen, eingesetzt wird.

**8.** Verfahren nach einem der vorhergehenden Ansprüche, **dadurch gekennzeichnet, dass** das Lösungmittel in (i) ein anorganisches Lösungsmittel ist.

**9.** Verfahren nach einem der vorhergehenden Ansprüche, **dadurch gekennzeichnet, dass** das Lösungmittel in (i) Wasser ist.

**10.** Verfahren nach Anspruch 1 zur Herstellung von schlagzähmodifizierten Polymerzusammensetzungen enthaltend

55 bis 65 Gew.-Teile Komponente A,
1,5 bis 5,0 Gew.-Teile Komponente B,
20 bis 40 Gew.-Teile Komponente C,
0,007 bis 0,020 Gew.-Teile Komponente D,
0,5 bis 3,0 Gew.-Teile Zusatzstoffe mit Ausnahme der üblicherweise zugesetzten Säuren der Komponente E, und

wobei die Summe der Gewichtsteile der Komponenten A+B+C+D+E in der Zusammensetzung 100 ergibt.

11. Verfahren nach Anspruch 1, **dadurch gekennzeichnet, dass** in Schritt (i) die Lösung der sauren Verbindung D mit einer Konzentration von 1 bis 6 Gew.-% hergestellt wird.

12. Verfahren nach einem der vorhergehenden Ansprüche, **dadurch gekennzeichnet, dass** Komponente D ausgewählt ist aus der Gruppe, die Brönstedt-saure Phosphorverbindungen, in der der Phosphor die Oxidationsstufe +3 oder +5 besitzt, umfasst.

13. Verfahren nach einem der vorhergehenden Ansprüche, **dadurch gekennzeichnet, dass** Komponente D ortho-Phosphorsäure ist.

14. Verwendung von auf mindestens einem pulverförmigen kautschukmodifizierten Vinyl(co)polymerisat gemäß Komponente B aufgezogenen Brönstedt-Säuren gemäß Komponente D zur Stabilisierung basisch verunreinigter Polymermischungen enthaltend mindestens ein Polymer hergestellt durch Polykondensation bei der Compoundierung und thermischen Formgebung.

15. Zusammensetzungen, die nach einem der Verfahren gemäß Anspruch 1 bis 13 hergestellt wurden, sowie daraus hergestellte Formkörper.

## Claims

1. Process for the preparation of impact-modified polymer compositions comprising

A) from 10 to 98 parts by weight, based on the sum of components A+B+C+D+E, of at least one polymer selected from the group of the aromatic polycarbonates, aromatic polyester carbonates and aromatic polyesters, as well as mixtures thereof,
B) from 0.5 to 50.0 parts by weight, based on the sum of components A+B+C+D+E, of at least one pulverulent rubber-modified vinyl (co)polymer,
C) from 0 to 80 parts by weight, based on the sum of components A+B+C+D+E, of at least one component selected from rubber-modified vinyl (co)polymers in granulate form and rubber-free vinyl (co)polymers,
D) from 0.002 to 0.200 part by weight, based on the sum of components A+B+C+D+E, of at least one Brönsted acid,
E) from 0.1 to 40.0 parts by weight, based on the sum of components A+B+C+D+E, of additives, with the exception of the acids according to component D that are conventionally added,

wherein the sum of the parts by weight of components A+B+C+D+E in the composition is 100, comprising the steps:

(i) preparing a solution of the acidic compound according to D with a concentration of from 0.5 to 8 wt.%,
(ii) physically blending the solution of the acidic compound D from step (i) with the total amount or a partial amount of the graft polymer powder according to component B and optionally with the total amount or a partial amount of one or more further pulverulent components of the polycarbonate-ABS composition,
(iii) melting, mixing and dispersing in one another the mixture from step (ii) with the further residual components A, B, C, and E of the composition, which have optionally likewise been premixed, in a compounding unit, wherein the solvent that has been added to the composition by the solution of the acidic compound is removed again in a degassing zone of the compounding unit by application of a low pressure, and the polymer melt so prepared is subsequently solidified by cooling and then granulated.

2. Process according to claim 1, **characterised in that** in step (ii), in addition to the solution of component D, further stabilisers of component E are also mixed with B.

3. Process according to claim 1, **characterised in that** in step (ii), components B and the solution (i) are first mixed, before further pulverulent components are added.

4. Process according to claim 1, **characterised in that** the amount of component B in step (ii) is not more than 10 parts by weight, based on the total composition.

5. Process according to claim 1, **characterised in that** the amount of component B in step (ii) is from 1.5 to 5.0 parts by weight, based on the total composition.

6. Process according to any one of the preceding claims, **characterised in that** the solution of component D is used in the mixture prepared in step (ii) in an amount, based on the sum of components B and D **in that** mixture, of not more than 30 parts by weight.

7. Process according to any one of the preceding claims, **characterised in that** the solution of component D is used in the mixture prepared in step (ii) in an amount, based on the sum of components B and D **in that** mixture, of not more than 20 parts by weight.

8. Process according to any one of the preceding claims, **characterised in that** the solvent in (i) is an inorganic solvent.

9. Process according to any one of the preceding claims, **characterised in that** the solvent in (i) is water.

10. Process according to claim 1 for the preparation of impact-modified polymer compositions comprising from 55 to 65 parts by weight of component A, from 1.5 to 5.0 parts by weight of component B, from 20 to 40 parts by weight of component C, from 0.007 to 0.020 part by weight of component D, from 0.5 to 3.0 parts by weight of additives, with the exception of the acids that are conventionally added, of component E, and
wherein the sum of the parts by weight of components A+B+C+D+E in the composition is 100.

11. Process according to claim 1, **characterised in that** in step (i) the solution of the acidic compound D is prepared with a concentration of from 1 to 6 wt.%.

12. Process according to any one of the preceding claims, **characterised in that** component D is selected from the group comprising Brönsted-acidic phosphorus compounds in which the phosphorus has oxidation state +3 or +5.

13. Process according to any one of the preceding claims, **characterised in that** component D is ortho-phosphoric acid.

14. Use of Brönsted acids of component D applied to at least one pulverulent rubber-modified vinyl (co)polymer of component B for the stabilisation of polymer mixtures, containing basic impurities, containing at least one polymer prepared by polycondensation, during compounding and thermal shaping.

15. Compositions prepared by one of the processes according to claim 1 to 13, as well as moulded bodies produced therefrom.

**Revendications**

1. Procédé pour la préparation de compositions de polymères à modification antichoc, contenant

A) 10 à 98 parties en poids, par rapport à la somme des composants A+B+C+D+E, d'au moins un polymère choisi dans le groupe des polycarbonates aromatiques, polyestercarbonates aromatiques et polyesters aromatiques ainsi que des mélanges de ceux-ci,
B) 0,5 à 50,0 parties en poids, par rapport à la somme des composants A+B+C+D+E, d'au moins un (co)polymérisat vinylique pulvérulent, modifié avec du caoutchouc,
C) 0 à 80 parties en poids, par rapport à la somme des composants A+B+C+D+E, d'au moins un composant choisi parmi des (co)polymérisats vinyliques modifiés avec du caoutchouc, sous forme de granulés, et des (co)polymérisats vinyliques exempts de caoutchouc,
D) 0,002 à 0,200 partie en poids, par rapport à la somme des composants A+B+C+D+E, d'au moins un acide de Brönsted,
E) 0,1 à 40,0 parties en poids, par rapport à la somme des composants A+B+C+D+E, d'additifs à l'exclusion des acides habituellement ajoutés selon le composant D,
la somme des parties en poids des composants A+B+C+D+E dans la composition étant égale à 100, comprenant les étapes :

(i) préparation d'une solution du composé acide selon D à une concentration de 0,5 à 8 % en poids,
(ii) mélange physique de la solution du composé acide D provenant de l'étape (i) avec la quantité totale ou

une quantité partielle de la poudre de polymère greffé selon le composant B et en option la quantité totale ou une quantité partielle d'un ou de plusieurs autres composants pulvérulents de la composition de polycarbonate-ABS,
(iii) fusion, mélange et dispersion entre eux du mélange provenant de l'étape (ii) avec les autres composants A, B, C et E restants de la composition, éventuellement également prémélangés, dans un appareil de compoundage, dans lequel le solvant qui avait été ajouté à la composition par la solution du composé acide est de nouveau éliminé dans une zone de dégazage de l'appareil de compoundage, par application d'une dépression et ensuite la masse fondue de polymère ainsi produite est solidifiée par refroidissement et ensuite granulée.

2. Procédé selon la revendication 1, **caractérisé en ce que** dans l'étape (ii) on mélange avec B, outre la solution du composant D, également d'autres stabilisants du composant E.

3. Procédé selon la revendication 1, **caractérisé en ce que** dans l'étape (ii) on mélange d'abord les composants B et la solution (i), avant d'ajouter d'autres composants pulvérulents.

4. Procédé selon la revendication 1, **caractérisé en ce que** la proportion du composant B dans l'étape (ii) est au maximum de 10 parties en poids, par rapport à la composition totale.

5. Procédé selon la revendication 1, **caractérisé en ce que** la proportion du composant B dans l'étape (ii) vaut de 1,5 à 5,0 parties en poids, par rapport à la composition totale.

6. Procédé selon l'une quelconque des revendications précédentes, **caractérisé en ce que** dans le mélange préparé dans l'étape (ii) on utilise la solution du composant D en une proportion n'excédant pas 30 parties en poids, par rapport à la somme des composants B et D dans ce mélange.

7. Procédé selon l'une quelconque des revendications précédentes, **caractérisé en ce que** dans le mélange préparé dans l'étape (ii) on utilise la solution du composant D en une proportion n'excédant pas 20 parties en poids, par rapport à la somme des composants B et D dans ce mélange.

8. Procédé selon l'une quelconque des revendications précédentes, **caractérisé en ce que** le solvant en (i) est un solvant inorganique.

9. Procédé selon l'une quelconque des revendications précédentes, **caractérisé en ce que** le solvant en (i) est l'eau.

10. Procédé selon la revendication 1, pour la préparation de compositions de polymères à modification antichoc, contenant
55 à 65 parties en poids de composant A,
1,5 à 5,0 parties en poids de composant B,
20 à 40 parties en poids de composant C,
0,007 à 0,020 partie en poids de composant D,
0,5 à 3,0 parties en poids d'additifs à l'exclusion des acides habituellement ajoutés du composant E, et
la somme des parties en poids des composants A+B+C+D+E dans la composition étant égale à 100.

11. Procédé selon la revendication 1, **caractérisé en ce que** dans l'étape (i) on prépare la solution du composé acide D à une concentration de 1 à 6 % en poids.

12. Procédé selon l'une quelconque des revendications précédentes, **caractérisé en ce que** le composant D est choisi dans le groupe qui comprend des composés phosphorés de type acide de Brönsted, dans lesquels le phosphore présente le degré d'oxydation +3 ou +5.

13. Procédé selon l'une quelconque des revendications précédentes, **caractérisé en ce que** le composé D est l'acide orthophosphorique.

14. Utilisation d'acides de Brönsted selon le composant D, fixés sur au moins un (co)polymérisat vinylique pulvérulent modifié avec du caoutchouc, selon le composant B, pour la stabilisation de mélanges de polymères contaminés par des bases, contenant au moins un polymère produit par polycondensation, lors du compoundage et du formage thermique.

**15.** Compositions, qui ont été préparées conformément à l'un des procédés selon l'une quelconque des revendications 1 à 13, ainsi que corps moulés produits à partir de celles-ci.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 900827 A
- EP A576950 A1
- WO 2007065579 A
- US 20060287422 A
- WO 2010063381 A
- EP 2257590 A
- DE AS1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE 2407674 A
- DE 2407776
- DE 2715932
- DE 1900270 A
- US PS3692744 A
- DE OS2035390 A
- US PS3644574 A
- DE OS2248242 A
- GB PS1409275 A
- US 4937285 P
- DE OS3704657 A
- DE OS3704655 A
- DE OS3631540 A
- DE OS3631539 A
- EP 0768157 A1
- EP 0867463 A1
- EP 0363608 A
- EP 0640655 A
- WO 0000541 A
- WO 0118105 A


### In der Beschreibung aufgeführte Nicht-Patentliteratur


- **SCHNELL.** Chemistry and Physics of Polycarbonates. Interscience Publishers, 1964
- Kunststoff-Handbuch. Carl-Hanser-Verlag, 1973, vol. VIII, 695 ff
- **W. SCHOLTAN ; H. LANGE.** *Kolloid, Z. und Z. Polymere,* 1972, vol. 250, 782-1796
- **ULLMANNS.** Enzyklopädie der Technischen Chemie. 1980, vol. 19, 280 ff
- **M. HOFFMANN ; H. KRÖMER ; R. KUHN.** Polymeranalytik. Georg Thieme-Verlag, 1977, vol. I und II
- Ullmanns Enzyklopädie der technischen Chemie. 1979, vol. 18, 301 ff
- **HOUBEN-WEYL.** *Methoden der organischen Chemie,* vol. 12/1, 43
- *Beilstein,* vol. 6, 177